Europäisches Patentamt

European Patent Office

Office européen des brevets

(19)

(11) **EP 1 104 749 A2**

(12) **EUROPÄISCHE PATENTANMELDUNG**

(43) Veröffentlichungstag:
 **06.06.2001 Patentblatt 2001/23**

(51) Int Cl.7: **C07C 41/03**, C08G 65/28,
 C11D 1/72, C10L 1/18

(21) Anmeldenummer: **00124435.9**

(22) Anmeldetag: **08.11.2000**

(84) Benannte Vertragsstaaten:
 **AT BE CH CY DE DK ES FI FR GB GR IE IT LI LU
 MC NL PT SE TR**
 Benannte Erstreckungsstaaten:
 **AL LT LV MK RO SI**

(30) Priorität: **09.11.1999 DE 19953850**

(71) Anmelder: **BASF AKTIENGESELLSCHAFT
 67056 Ludwigshafen (DE)**

(72) Erfinder:
 • **Trötsch-Schaller, Irene
 67281 Bissersheim (DE)**

• **Oetter, Günter
 67227 Frankenthal (DE)**
• **Oppenländer, Kurt
 67061 Ludwigshafen (DE)**
• **Stösser, Michael
 67141 Neuhofen (DE)**

(74) Vertreter: **Kinzebach, Werner, Dr. et al
 Patentanwälte,
 Reitstötter, Kinzebach & Partner,
 Ludwigsplatz 4
 67059 Ludwigshafen (DE)**

(54) **Verfahren zur Oxyalkylierung von Alkanolen mit Alkylenoxiden**

(57) Die Erfindung betrifft ein Verfahren zur Oxyalkylierung von Alkanolen, wobei die Umsetzung unter Verwendung eines heterogenen basischen Katalysators erfolgt, der ausgewählt ist unter basischen Aluminate; die damit hergestellten Verbindungen und deren Verwendung als Trägeröl in Kraftstoffadditiven oder als Niotensid in Wasch- oder Reinigungsmitteln.

EP 1 104 749 A2

**Beschreibung**

Die Erfindung betrifft ein Verfahren zur Oxyalkylierung von Alkanolen, wobei die Umsetzung unter Verwendung eines heterogenen basischen Katalysators erfolgt, der ausgewählt ist unter basischen Aluminaten; die damit hergestellten Verbindungen und deren Verwendung als Trägeröl für Kraftstoff-Detergensadditive oder als Niotensid in Wasch- oder Reinigungsmittel.

Die katalytische Oxyalkylierung organischer Verbindungen mittels eines Alkylenoxids ist seit langem bekannt. Dabei kommen grundsätzlich homogene oder heterogene Katalysatoren in Frage. Die Reaktionsprodukte werden als Oxalkylate oder Alkoxylate bezeichnet. Oxalkylate von Alkanolen finden beispielsweise Verwendung als Trägeröle in Kraftstoffadditivmischungen oder als Niotenside in Wasch- und Reinigungsmitteln.

Zur Synthese von Trägerölen werden üblicherweise $C_2$-$C_{20}$-Alkanole, vorzugsweise ein $C_{13}$-Alkohol (Tridecanol N), verwendet. Als Alkylenoxide kommen vorzugsweise Propylen- bzw. Butylenoxid zum Einsatz.

Zur Synthese von Niotensiden werden üblicherweise $C_2$-$C_{22}$-Alkanole, vorzugsweise Oxoalkohole verwendet. Oxoalkohole sind bekanntlich durch Oxosynthese zugängliche überwiegend einwertige Alkohole, wie $C_{13}$-$C_{15}$-oxoalkohole sowie $C_{11}$-oxoalkohole oder Gemische davon. Als Alkylenoxid kommt vorzugsweise Ethylenoxid zum Einsatz.

Nach der Oxyalkylierung des Alkanols ist es erforderlich, den Katalysator aus dem Reaktionsprodukt zu entfernen. Dies gilt in besonderem Maße für die als Trägeröle oder Niotenside verwendeten Reaktionsprodukte, da Katalysatorrückstände einerseits korrosiv wirken können und andererseits bei Verbrennung im Motorraum zu unerwünschten Ablagerungen und Emissionen führen können. Im Falle der Heterogen-Katalyse bietet sich an, den Katalysator durch Filtration zu entfernen, wozu aber eine entsprechend gute Filtrierbarkeit des Katalysators erforderlich ist. Im Falle der homogenen Säure- bzw. Basen-Katalyse kommt eine entsprechende Neutralisierung in Frage. Beispielsweise wird nach Anwendung der Basen-Katalyse der entsprechende Katalysator durch "Finish"-Prozesse aus dem Reaktionsgemisch entfernt.

Zur Heterogen-Katalyse der Oxyalkylierung verschiedener organischer Verbindungen ist beispielsweise hydrophobierter Hydrotalcit verwendet worden (vgl. DE-A-38 43 713 bzw. US-A-4,962,237). Die Entfernung des hydrophobierten Hydrotalcits durch Filtration verläuft jedoch nur sehr unbefriedigend, weil sich vermutlich die Poren des dazu verwendeten Tiefenfilters zusetzen und somit einen Filtrationsprozeß erschweren.

Die Entfernung des zur homogenen Katalyse der Oxyalkylierung verwendeten, vorzugsweise basischen Zusatzes, insbesondere Kaliumhydroxid, Natriumhydroxid, Erdalkalioxide, Alkali- und/oder Erdalkalicarbonate und/oder -hydroxide, erfolgt vorzugsweise durch Neutralisation mit Hilfe von Phosphorsäure unter Bildung des entsprechenden Phosphats (vgl. US 4,306,943). Bei diesem Verfahren ist die exakte Dosierung der Phosphorsäure kritisch. Außerdem muß das entstandene Phosphat deponiert oder verbrannt werden.

Es sind auch noch weitere Verfahren zur Entfernung des Katalysators bekannt, beispielsweise die Adsorption an einem Trägermaterial, beispielsweise Magnesiumsilicat, wobei in diesem Fall der pyrophore Charakter des mit Alkoxylat benetzten Materials kritisch ist. Es ist auch ein Verfahren bekannt, bei dem der Katalysator durch den Einsatz eines Ionenaustauschers entfernt wird.

Aufgabe der Erfindung ist daher die Bereitstellung eines verbesserten Verfahrens zur Oxyalkylierung von Alkanolen.

Diese Aufgabe wurde überraschenderweise durch Verwendung von basischen Aluminaten als heterogene Katalysatoren zur Oxyalkylierung von Alkanolen gelöst. Dadurch lassen sich die Nachteile der Verfahren des Standes der Technik überraschend vorteilhaft vermeiden.

Es wurde überraschenderweise festgestellt, daß basische Aluminate die Oxyalkylierung von Alkanolen äußerst selektiv katalysieren und außerdem nach der Reaktion sehr gut abfiltrierbar sind, so daß die bisher notwendigen aufwendigen "Finish"-Prozesse nicht mehr durchgeführt werden müssen. Die basischen Aluminate besitzen außerdem eine Basizität, die mit der von Kaliumhydroxid bzw. Natriumhydroxid vergleichbar ist. Außerdem ergeben sich verbesserte Raum-Zeit-Ausbeuten.

Außerdem wurde überraschenderweise festgestellt, daß sich die Verwendung von basischen Aluminaten als Katalysatoren im Vergleich zu einer Verwendung homogenen Katalysatoren, wie KOH, nicht nachteilig auf die anwendungstechnischen Eigenschaften der Reaktionsprodukte bei einer Anwendung als Trägeröl oder Niotensid auswirkt.

Ein erster Gegenstand der Erfindung betrifft daher ein Verfahren zur Oxyalkylierung von Alkanolen, wobei man wenigstens ein Alkanol mit wenigstens einem Alkylenoxid in einer basenkatalysierten Reaktion umsetzt, das dadurch gekennzeichnet ist, daß die Umsetzung unter Verwendung eines heterogenen basischen Katalysators erfolgt, der ausgewählt ist unter basischen Aluminaten.

Bei den erfindungsgemäß als Katalysator verwendeten basischen Aluminaten handelt es sich beispielsweise um Alkali- bzw. Erdalkalimetallaluminate, insbesondere um Natrium- bzw. Kaliumaluminat. Es sind aber auch andere Aluminate verwendbar, sofern sie eine ausreichende Basizität aufweisen. Die basischen Aluminate können in fester Form, z.B. einzeln oder in Form von Gemischen mehrerer Aluminate als Katalysatorzusammensetzungen, verwendet werden.

Im Falle von Natriumaluminat handelt es sich um einen Stoff mit folgender Zusammensetzung:

$$NaAlO_2 \text{ bzw. } Na_2O*Al_2O_3,$$

der eine Raumnetzstruktur aufweist (vgl. Roempp Chemielexikon, 9. Aufl., Bd. 1, unter dem Stichwort "Aluminate", auf S. 131) sowie Hollemann/Wiberg, Lehrbuch der anorganischen Chemie 81.-90. Auflage, S. 647ff, Sauerstoffverbindungen des Aluminiums).

Das erfindungsgemäße Verfahren unterliegt hinsichtlich der verwendbaren Alkanole und Alkylenoxide keinen besonderen Beschränkungen.

Beispiele für verwendbare Alkanole sind ein-, zwei-, drei-, vier-und mehrwertige Alkanole, wie die in der DE-A-38 43 713 auf S. 3, Zeilen 35-41 bzw. Zeilen 47-50, in US-A-4 962 237 in Spalte 2, Zeilen 29-41, oder in US-A-4 306 943 in Spalte 1, zeilen 50-58, offenbarten Verbindungen, worauf hiermit ausdrücklich Bezug genommen wird.

Wenn das erfindungsgemäße Verfahren speziell zur Herstellung von Trägerölen dient, werden beispielsweise $C_2$-$C_{20}$-Alkanole, vorzugsweise $C_{13}$-Alkanol (Tridecanol N) verwendet. Sollen speziell Niotenside hergestellt werden, so setzt man beispielsweise $C_2$-$C_{22}$-Alkanole, vorzugsweise $C_{13}$-$C_{15}$-oxoalkohole, $C_{15}$-$C_{17}$-Oxoalkohole, oder $C_9$-$C_{11}$-oxoalkohole, wie z.B. $C_{10}$-oxoalkohole sowie $C_{11}$-oxoalkohole, ein.

Auch die umzusetzenden Alkylenoxide unterliegen an sich keinen besonderen Beschränkungen. Beispielsweise können die in US 4 962 237 in Spalte 3, Zeilen 12-20, angegebenen Verbindungen verwendet werden. Sollen Trägeröle synthetisiert werden, so verwendet man bevorzugt Propylen- bzw. Butylenoxid. Im Falle der Herstellung von Niotensiden wird bevorzugt Ethylenoxid eingesetzt.

Die eingesetzten Alkylenoxidmengen sind über einen weiten Bereich variierbar und richten sich in erster Linie nach dem gewünschten Eigenschaftprofil des Oxyalkylates und der Art des jeweiligen Alkylenoxids. Die Mengen liegen üblicherweise im Bereich von 1 Mol bis 100 Mol pro Mol Starter (d.h. Alkoholat). So können z.B. 1 bis 20 Mol, vorzugsweise 10 Mol bis 20 Mol, Propylenoxid, 1 Mol bis 40 Mol, vorzugsweise 18 Mol bis 30 Mol, Butylenoxid, und 1 Mol bis 100 Mol, vorzugsweise 3 Mol bis 80 Mol, Ethylenoxid, jeweils pro Mol Starter eingesetzt werden.

Das erfindungsgemäße Verfahren wird vorzugsweise so durchgeführt, daß man

a) das Alkanol zunächst mit dem basischen Aluminat aktiviert; und dann

b) das aktivierte Alkanol mit dem Alkylenoxid oxalkyliert.

Das Alkanol wird zunächst mit dem basischen Aluminat in einer Menge von 0,1 Gew.-% bis 1,0 Gew.-%, vorzugsweise 0,1 Gew.-% bis 0,3 Gew.-%, bezogen auf das Gesamtgewicht von Alkanol und Alkylenoxid, versetzt und üblicherweise vor der Umsetzung unter vermindertem Druck von beispielsweise etwa 1 bis 100 mbar, beispielsweise bei 20-40 mbar, und beispielsweise bei 20 bis 150°C, vorzugsweise bei etwa 50 bis 100°C (z. B. an einem Rotavapor) zum Beispiel etwa 1 bis 2 Stunden zur Herstellung des Alkoholats (Starter) behandelt.

Anschließend wird das gebildete Alkoholat (Starter) unter Druck, z.B. in einem Autoklaven, beispielsweise bei 1 bis 10 bar, üblicherweise 6 bis 8 bar, und bei 100 bis 160°C, mit dem Alkylenoxid umgesetzt. Bevorzugte Reaktionstemperaturen sind etwa 135°C im Falle von Propylenoxid, etwa bei 145°C im Falle von Butylenoxid und etwa 130°C im Falle von Ethylenoxid. Die Zugabegeschwindigkeit des Alkylenoxids liegt z.B. im Bereich von etwa 0,5 bis 2 Mol/h, vorzugsweise bei etwa 1 bis 1,5 Mol/h. Die optimalen Umsetzungsbedingungen können vom Fachmann ohne hohen experimentellen Aufwand durch wenige Vorversuche bestimmt werden.

Die Reaktionschritte a) und b) können, falls erforderlich, in Gegenwart eines geeigneten inerten Solvens, wie z.B. Xylol, durchgeführt werden.

Nach erfolgter Umsetzung wird der Katalysator abfiltriert. Dazu kann auch ein Filtrierhilfsmittel zugesetzt werden, beispielsweise eine Diatomeenerde. Die Filtration erfolgt in ansich bekannter Weise, wie z.B. unter Druck und unter Verwendung eines Tiefenfilters.

Ein weiterer Gegenstand der Erfindung betrifft oxalkylierte Alkanole, erhältlich nach einem erfindungsgemäßen Verfahren. Bevorzugt sind oxalkylierte Alkanole, die erhältlich sind durch Umsetzung wenigstens eines geradkettigen oder verzweigten, einwertigen $C_2$-$C_{22}$-Alkanols, wie z.B. Tridecanol N mit 10 bis 30 Mol wenigstens eines $C_3$-$C_4$-Alkylenoxids, z.B. Propylen- oder Butylenoxid. Diese setzt man bevorzugt als Trägeröl in Kraftstoff- und Additivformulierungen ein. Bevorzugt sind auch oxalkylierte Alkanole, erhältlich durch Umsetzung wenigstens eines geradkettigen oder verzweigten, einwertigen $C_2$-$C_{22}$-Alkanols, wie z.B. eines $C_{13}$-$C_{15}$-Oxoalkohols oder $C_9$-$C_{11}$-oxoalkohols, wie beispielsweise eines $C_{11}$-Oxoalkohols, mit 3 bis 80 Mol Ethylenoxid. Diese setzt man vorzugsweise als Niotensid in Wasch- oder Reinigungsmitteln ein.

Ein weiterer Gegenstand betrifft Kraftstoffadditivkonzentrate, enthaltend neben üblichen Additivkomponenten wenigstens ein oxalkyliertes Alkanol gemäß obiger Definition in einem Anteil von etwa 10 bis 50 Gew.-%, wie z.B. etwa 20 bis 40 Gew.-% oder 25 bis 35 Gew.-%, als Trägeröl.

Ein weiterer Gegenstand der Erfindung betrifft Wasch- oder Reinigungsmittel, enthaltend neben üblichen Bestandteilen wenigstens ein oxalkyliertes Alkanol gemäß obiger Definition als Niotensid-Komponente in einem Anteil von etwa 1 bis 20 Gew.-%, wie z.B. etwa 5 bis 10 Gew.-%.

Gegenstand der Erfindung sind auch Kraftstoffzusammensetzungen für Verbrennungsmotoren, die in einer Hauptmenge eines flüssigen Kohlenwasserstoffkraftstoffs wenigstens ein oxalkyliertes Alkanol als Trägerölkomponente in einem Anteil von etwa 100 bis 10 000 mg/kg Kraftstoff enthalten.

Die erfindungsgemäß hergestellten Trägeröle können vorteilhaft mit üblichen Detergensadditiven kombiniert werden. Als Additive mit Detergenswirkung kommen beispielsweise solche in Frage, die mindestens einen hydrophoben Kohlenwasserstoffrest mit einem zahlengemittelten Molekulargewicht ($M_n$) von 85 bis 20 000 und mindestens eine polare Gruppierung, die ausgewählt ist unter

(a) Mono- oder Polyaminogruppen mit bis zu 6 Stickstoffatomen, wobei mindestens ein Stickstoffatom basische Eigenschaften hat,

(b) Nitrogruppen, ggf. in Kombination mit Hydroxylgruppen,

(c) Hydroxylgruppen in Kombination mit Mono- oder Polyaminogruppen, wobei mindestens ein Stickstoffatom basische Eigenschaften hat,

(d) Carboxylgruppen oder deren Alkalimetall- oder Erdalkalimetallsalzen,

(e) Sulfonsäuregruppen oder deren Alkalimetall- oder Erdalkalimetallsalzen,

(f) Polyoxy-$C_2$-$C_4$-Alkylengruppierungen, die durch Hydroxylgruppen, Mono- oder Polyamingruppen, wobei mindestens ein Stickstoffatom basische Eigenschaften hat, oder durch Carbamatgruppen terminiert sind,

(g) Carbonsäureestergruppen,

(h) aus Bernsteinsäureanhydrid abgeleitete Gruppierungen mit Hydroxy- und/oder Amino- und/oder Amido- und/oder Imidogruppen und

(i) durch Mannich-Umsetzung von phenolischen Hydroxylgruppen mit Aldehyden und Mono- oder Polyaminen erzeugte Gruppierungen

aufweisen.

Der hydrophobe Kohlenwasserstoffrest in diesen Detergensadditiven, der für die ausreichende Löslichkeit im Kraftstoff sorgt, hat ein zahlengemitteltes Molelulargewicht ($M_n$) von 85 bis 20 000, insbesondere von 113 bis 10 000, vor allem von 300 bis 5000. Als typischer hydrophober Kohlenwasserstoffrest, insbesondere in Verbindung mit den polaren Gruppierungen (a), (c), (h) und (i), kommen der Polypropenyl-, Polybutenyl- und Polyisobutenylrest mit jeweils $M_n$ = 300 bis 5000, insbesondere 500 bis 2500, vor allem 750 bis 2250, in Betracht.

Beispiele für weitere Ottokraftstoffadditive mit polaren Gruppierungen (a) sind Polyalkenmono- oder Polyalkenpolyamine oder funktionelle Derivate davon auf Basis von Polypropen, Polybuten oder Polyisobuten. Beispiele für Polyalkenamine sind Poly-$C_2$-$C_6$-alkenamine oder funktionelle Derivate davon. Diese Verbindungen können ein zahlengemitteltes Molekulargewicht $M_n$ von 300 bis 5000 haben. Besonders bevorzugte Detergensadditive sind ausgewählt unter Polyisobutenaminen und funktionellen Derivaten davon, wie sie beispielsweise in der EP-A-0 244 616 und der EP-A-0 578 323 beschrieben sind. Die Polyisobutenamine haben gewöhnlich ein zahlengemitteltes Molekulargewicht $M_n$ im Bereich von etwa 150 bis etwa 5000, vorzugsweise etwa 500 bis 2000, insbesondere etwa 800 bis 1500 g, pro Mol.

Beispiele für weitere Kraftstoffadditive mit polaren Gruppierungen (b) sind die Umsetzungsprodukte von Polyisobutenen mit einem mittleren Polymerisationsgrade P = 5 bis 100 mit Stickoxiden oder Gemischen aus Stickoxiden und Sauerstoff.

Beispiele für weitere Kraftstoffadditive mit polaren Gruppierungen (c) sind die Umsetzungsprodukte von Polyisobutenepoxiden, die aus überwiegend endständige Doppelbindungen aufweisendem Polyisobuten mit einem zahlengemittelten Molekulargewicht Mn im Bereich von 300 bis 5000 erhältlich sind, mit Ammoniak, Mono- oder Polyaminen.

Beispiele für weitere Kraftstoffadditive mit polaren Gruppierungen (d) sind Copolymere von $C_2$-$C_{40}$-olefinen

mit Maleinsäureanhydrid mit einer Gesamt-Molmasse von 500 bis 20000, deren Carboxylgruppen ganz oder teilweise zu den Alkalimetall- oder Erdalkalimetallsalzen und ein verbleibender Rest der Carboxylgruppen mit Alkoholen oder Aminen umgesetzt sind.

Beispiele für weitere Kraftstoffadditive mit polaren Gruppierungen (e) sind Alkalimetall- oder Erdalkalimetallsalze eines Sulfobernsteinsäurealkylesters.

Beispiele für weitere Kraftstoffadditive mit polaren Gruppierungen (f) sind Polyether oder Polyetheramine oder funktionelle Derivate davon, die durch Umsetzung von $C_2$-$C_{30}$-Alkanolen, $C_6$-$C_{60}$-Alkandiolen, Mono- oder Di-$C_2$-$C_{30}$-Alkylaminen, $C_1$-$C_{30}$-Alkylcyclohexanolen oder $C_1$-$C_{30}$-Alkylphenolen mit 1 bis 30 mol Ethylenoxid und/ oder Propylenoxid und/oder Butylenoxid pro Hydroxylgruppe oder Aminogruppe und, im Falle der Polyetheramine, durch anschließende reduktive Aminierung mit Ammoniak, Monoaminen oder Polyaminen erhältlich sind. Beispielsweise können als Polyetheramine Poly-$C_2$-$C_6$-Alkylenoxidamine oder funktionelle Derivate davon verwendet werden.

Beispiele für weitere Kraftstoffadditive mit polaren Gruppierungen (g) sind Ester von Mono-, Di- oder Tricarbonsäure mit langkettigen Alkanolen oder Polyolen.

Beispiele für weitere Kraftstoffadditive mit polaren Gruppierungen (h) sind Derivate von Polyisobutenylbernsteinsäureanhydrid, die durch Umsetzung von konventionellem oder hochreaktivem Polyisobuten mit $M_n$ = 300 bis 5000 mit Maleinsäureanhydrid auf thermischem Wege oder über das chlorierte Polyisobuten erhältlich sind.

Beispiele für weitere Kraftstoffadditive mit polaren Gruppierungen (i) sind die Umsetzungsprodukte von Polyisobuten-substituierten Phenolen mit Formaldehyd und Mono- oder Polyaminen.

Als weitere Kraftstoffadditive mit Detergenswirkung seien weiterhin im einzelnen die folgenden beispielhaft genannt.

Mono- oder Polyaminogruppen (a) enthaltende Additive sind vorzugsweise Polyalkenmono- oder Polyalkenpolyamine auf Basis von Polypropen oder von hochreaktivem (d.h. mit überwiegend endständigen Doppelbindungen meist in der β- und γ-Position) oder konventionellem (d.h. mit überwiegend mittenständigen Doppelbindungen) Polybuten oder Polyisobuten mit $M_n$ = 300 bis 5000. Derartige Additive auf Basis von hochreaktivem Polyisobuten, welche aus dem Polyisobuten, das bis zu 20 Gew. % n-Buten Einheiten enthalten kann, durch Hydroformylierung und reduktive Aminierung mit Ammoniak, Monoaminen oder Polyaminen, wie Dimethylaminopropylamin, Ethylendiamin, Diethylentriamin, Triethylentetramin oder Tetraethylenpentamin, hergestellt werden können, sind insbesondere aus der EP-A-244 616 bekannt. Geht man bei der Herstellung der Additive von Polybuten oder Polyisobuten mit überwiegend mittenständigen Doppelbindungen (meist in der β- und γ-Position) aus, bietet sich der Herstellweg durch Chlorierung und anschließende Aminierung oder durch Oxidation der Doppelbindung mit Luft oder Ozon zur Carbonyl- oder Carboxylverbindung und anschließende Aminierung unter reduktiven (hydrierenden) Bedingungen an. Zur Aminierung können hier die gleichen Amine wie oben für die reduktive Aminierung des hydroformylierten hochreaktiven Polyisobutens eingesetzt werden. Entsprechende Additive auf Basis von Polypropen sind insbesondere in der WO-A-94/24231 beschrieben.

Weitere bevorzugte Monoaminogruppen (a) enthaltende Additive sind die Hydrierungsprodukte der Umsetzungsprodukte aus Polyisobutenen mit einem mittleren Polymerisationsgrad P = 5 bis 100 mit Stickoxiden oder Gemischen aus Stickoxiden und Sauerstoff, wie sie insbesondere in der WO-A-97/03946 beschrieben sind.

Weitere bevorzugte Monoaminogruppen (a) enthaltende Additive sind die aus Polyisobutenepoxiden durch Umsetzung mit Aminen und nachfolgende Dehydratisierung und Reduktion der Aminoalkohole erhältlichen Verbindungen, wie sie insbesondere in der DE-A-196 20 262 beschrieben sind.

Nitrogruppen, ggf. in Kombination mit Hydroxylgruppen, (b) enthaltende Additive sind vorzugsweise Umsetzungsprodukte aus Polyisobutenen des mittleren Polymerisationsgrades P = 5 bis 100 oder 10 bis 100 mit Stickoxiden oder Gemischen aus Stickoxiden und Sauerstoff, wie sie insbesondere in der WO-A-96/03367 und in der Wo A 96/03479 beschrieben sind. Diese Umsetzungsprodukte stellen in der Regel Gemische aus reinen Nitropolyisobutanen (z.B. α,β-Dinitropolyisobutan) und gemischten Hydroxynitropolyisobutanen (z.B. α-Nitro-β-hydroxypolyisobutan) dar.

Hydroxylgruppen in Kombination mit Mono- oder Polyaminogruppen (c) enthaltende Additive sind insbesondere Umsetzungsprodukte von Polyisobutenepoxiden, erhältlich aus vorzugsweise überwiegend endständige Doppelbindungen aufweisendem Polyisobuten mit $M_n$ = 300 bis 5000, mit Ammoniak, Mono- oder Polyaminen, wie sie insbesondere in der EP-A-476 485 beschrieben sind.

Carboxylgruppen oder deren Alkalimetall- oder Erdalkalimetallsalze (d) enthaltende Additive sind vorzugsweise Copolymere von $C_2$-$C_{40}$ Olefinen mit Maleinsäureanhydrid mit einer Gesamt Molmasse von 500 bis 20 000, deren Carboxylgruppen ganz oder teilweise zu den Alkalimetall- oder Erdalkalimetallsalzen und ein verbleibender Rest der Carboxylgruppen mit Alkoholen oder Aminen umgesetzt sind. Solche Additive sind insbesondere aus der EP-A-307 815 bekannt. Derartige Additive dienen hauptsächlich zur Verhinderung von Ventilsitzverschleiß und können, wie in der WO-A-87/01126 beschrieben, mit Vorteil in Kombination mit üblichen Kraftstoffdetergentien wie Poly(iso)butenaminen oder Polyetheraminen eingesetzt werden.

Sulfonsäuregruppen oder deren Alkalimetall- oder Erdalkalimetallsalze (e) enthaltende Additive sind vorzugsweise Alkalimetall-oder Erdalkalimetallsalze eines Sulfobernsteinsäurealkylesters, wie er insbesondere in der EP-A-639 632 beschrieben ist. Derartige Additive dienen hauptsächlich zur Verhinderung von Ventilsitzverschleiß und können mit Vorteil in Kombination mit üblichen Kraftstoffdetergentien wie Poly(iso)butenaminen oder Polyetheraminen eingesetzt werden.

Polyoxy-$C_2$-$C_4$-alkylengruppierungen (f) enthaltende Additive sind vorzugsweise Polyether oder Polyetheramine, welche durch Umsetzung von $C_2$-$C_{60}$-Alkanolen, $C_6$-$C_{30}$-Alkandiolen, Mono- oder Di-$C_2$-$C_{30}$-alkylaminen, $C_1$-$C_{30}$-Alkylcyclohexanolen oder $C_1$-$C_{30}$-Alkylphenolen mit 1 bis 30 mol Ethylenoxid und/oder Propylenoxid und/ oder Butylenoxid pro Hydroxylgruppe oder Aminogruppe und, im Falle der Polyetheramine, durch anschließende reduktive Aminierung mit Ammoniak, Monoaminen oder Polyaminen erhältlich sind. Derartige Produkte werden insbesondere in EP-A-310 875, EP-A-356 725, EP-A-700 985 und US-A-4 877 416 beschrieben. Im Falle von Polyethern erfüllen solche Produkte auch Trägeröleigenschaften. Typische Beispiele hierfür sind Tridecanol oder Isotridecanolbutoxylate, Isononylphenolbutoxylate sowie Polyisobutenolbutoxylate und propoxylate sowie die entsprechenden Umsetzungsprodukte mit Ammoniak.

Carbonsäureestergruppen (g) enthaltende Additive sind vorzugsweise Ester aus Mono-, Di- oder Tricarbonsäuren mit langkettigem Alkanolen oder Polyolen, insbesondere solche mit einer Mindestviskosität von 2 mm$^2$/s bei 100°C, wie sie insbesondere in der DE-A-38 38 918 beschrieben sind. Als Mono-, Di- oder Tricarbonsäuren können aliphatische oder aromatische Säuren eingesetzt werden, als Esteralkohole bzw. -polyole eignen sich vor allem langkettige Vertreter mit beispielsweise 6 bis 24 C-Atomen. Typische Vertreter der Ester sind Adipate, Phthalate, iso-Phthalate, Terephthalate und Trimellitate des Isooctanols, Isononanols, Isodecanols und des Isotridecanols. Derartige Produkte erfüllen auch Trägeröleigenschaften.

Aus Bernsteinsäureanhydrid abgeleitete Gruppierungen mit Hydroxy-und/oder Amino- und/oder Amido- und/ oder Imidogruppen (h) enthaltende Additive sind vorzugsweise entsprechende Derivate von Polyisobutenylbernsteinsäureanhydrid, welche durch Umsetzung von konventionellem oder hochreaktivem Polyisobuten mit $M_n$ = 300 bis 5000 mit Maleinsäureanhydrid auf thermischem Wege oder über das chlorierte Polyisobuten erhältlich sind. Von besonderem Interesse sind hierbei Derivate mit aliphatischen Polyaminen wie Ethylendiamin, Diethylentriamin, Triethylentetramin oder Tetraethylenpentamin. Derartige Ottokraftstoffadditive sind insbesondere in US-A-4 849 572 beschrieben.

Durch Mannich Umsetzung von phenolischen Hydroxylgruppen mit Aldehyden und Mono- oder Polyaminen erzeugte Gruppierungen (i) enthaltende Additive sind vorzugsweise Umsetzungsprodukte von Polyisobuten-substituierten Phenolen mit Formaldehyd und Mono- oder Polyaminen wie Ethylendiamin, Diethylentriamin, Triethylentetramin, Tetraethylenpentamin oder Dimethylaminopropylamin. Die Polyisobuten-substituierten Phenole können von konventionellem oder hochreaktivem Polyisobuten mit $M_n$ = 300 bis 5000 stammen. Derartige "Polyisobuten Mannichbasen" sind insbesondere in der EP-A-831 141 beschrieben.

Weitere erfindungsgemäß geeignete Detergensadditive sind beispielsweise beschrieben in den europäischen Patentanmeldungen EP-A-0 277 345, 0 356 725, 0 476 485, 0 484 736, 0 539 821, 0 543 225, 0 548 617, 0 561 214, 0 567 810 und 0 568 873; in den deutschen Patentanmeldungen DE-A-39 42 860, 43 09 074, 43 09 271, 43 13 088, 44 12 489, 0 44 25 834, 195 25 938, 196 06 845, 196 06 846, 196 15 404, 196 06 844, 196 16 569, 196 18 270 und 196 14 349; sowie in der WO-A-96/03479. Besonders brauchbare Detergensadditive werden von der BASF AG, Ludwigshafen, unter der Handelsbezeichnung Kerocom® PIBA vertrieben. Diese enthalten Polyisobutenamine gelöst in aliphatischen $C_{10}$-$C_{14}$-Kohlenwasserstoffen. Die erfindungsgemäß verwendeten Detergensadditive, insbesondere die bevorzugt verwendeten Polyisobutenamin-Additive, haben gewöhnlich ein zahlengemitteltes Molekulargewicht $M_n$ im Bereich von etwa 150 bis etwa 5000, vorzugsweise etwa 500 bis 2000, insbesondere etwa 800 bis 1500 g, pro Mol.

Zur genaueren Definition der einzelnen aufgeführten Kraftstoffadditive wird hier auf die Offenbarungen der obengenannten Schriften des Standes der Technik ausdrücklich Bezug genommen.

Die erfindungsgemäß verwendeten Kraftstoffadditive bzw. damit additivierten Kraftstoffe können neben den genannten Trägerölen und Detergensadditiven noch weitere übliche Komponenten und Additive enthalten wie z. B. weitere Trägeröle, Korrosionsinhibitoren, Demulgatoren und Farbstoffe.

Als Beispiele für weitere brauchbare Trägeröle oder Trägerölflüssigkeiten sind zu nennen mineralische Trägeröle, synthetische Trägeröle, die von den erfindungsgemäß hergestellten Trägerölen verschieden sind, und Gemische daraus, die mit dem/den verwendeten Additiv(en) und dem Kraftstoff verträglich sind. Geeignete mineralische Trägeröle sind bei der Erdölverarbeitung anfallende Fraktionen wie Kerosin oder Naphtha, Brightstock oder Grundöle mit Viskositäten wie beispielsweise aus der Klasse SN 500-2000, aber auch aromatische Kohlenwasserstoffe und paraffinische Kohlenwasserstoffe.

Beispiele für geeignete synthetische Trägeröle sind Polyolefine, (Poly)ester, und Polyether, aliphatische Polyetheramine, Alkylphenol-gestartete Polyether und Alkylphenol-gestartete Polyetheramine. Geeignete Trägerölsysteme sind beispielsweise beschrieben in DE-A-38 38 918, DE-A-38 26 608, DE-A-41 42 241, DE-A-43 09 074, US 4 877 416 und EP-A-0 452 328, worauf hier ausdrücklich Bezug genommen wird.

Weitere übliche Additive sind Korrosionsinhibitoren, beispielsweise auf Basis von zur Filmbildung neigenden Ammoniumsalzen organischer Carbonsäuren oder von heterocyclischen Aromaten bei Buntmetallkorrosionsschutz, Antioxidantien oder Stabilisatoren, beispielsweise auf Basis von Aminen wie p-Phenylendiamin, Dicyclohexylamin oder Derivaten hiervon oder von Phenolen wie 2,4-Di-tert.-butylphenol oder 3,5-Di-tert.-butyl-4-hydroxyphenylpropionsäure, Demulgatoren, Antistatikmittel, Metallocene wie Ferrocen oder Methylcyclopentadienylmangantricarbonyl, Schmierfähigkeitsverbesserer (Lubricity-Additive) wie bestimmte Fettsäuren, Alkenylbernsteinsäureester, Bis(hydroxyalkyl) fettamine, Hydroxyacetamide oder Ricinusöl sowie Farbstoffe (Marker). Es können auch Amine zur Absenkung des pH Wertes des Kraftstoffes zugesetzt.

In den erfindungsgemäßen Wasch- und Reinigungsmitteln können die erfindungsgemäß hergestellten Niotenside mit üblichen weiteren Bestandteilen kombiniert werden. Dies sind z.B. weitere nichtionische, kationische, anionische oder zwitterionische Tenside, Cotenside, wie z.B. Alkohole, Lösungsvermittler, wie z.B. Cumolsulfonat, Bleichmittel, Füllstoffe, Komplexbildner, Farb- und Duftstoffe, Lösungsmittel und Enzyme.

Ein letzter Gegenstand der Erfindung betrifft die Verwendung von basischen Aluminaten gemäß obiger Definition als Katalysatoren zur Oxyalkylierung von Verbindungen mit wenigstens einem aktiven H-Atom, wie z.B. die in der DE-A-38 43 713 aufgeführten Verbindungen und insbesondere von Alkanolen mit Alkylenoxiden.

Die folgenden nichtlimitierenden Beispiele veranschaulichen die erfindungsgemäße Verwendung von basischen Aluminaten als Katalysatoren zur Herstellung von Trägerölen für Kraftstoff-Detergensadditive, bzw. zur Herstellung von Niotensiden, durch Oxyalkylierung.

Beispiel 1: Herstellung eines Trägeröls

250 g (1,25 Mol) Tridecanol N werden zusammen mit 4,25 g Na-Aluminat (0,3 Gew.-%; Dichte (20°C) = 2,350g/cm$^3$, Schüttdichte = 860 g/l) bezogen auf den Gesamtansatz, unter vermindertem Druck bei 25 mbar und 80°C eine Stunde an einem Rotavapor vorbehandelt. Das erhaltene Gemisch wird in einem Druckautoklaven vorgelegt und auf 135°C erhitzt. Bei dieser Temperatur werden unter erhöhtem Druck bei 6 bar und innerhalb von etwa 15 Stunden 1160 g (20 Mol) Propylenoxid eingegast. Das erhaltene Reaktionsgemisch wird anschließend mit Hilfe einer Drucknutsche und unter Verwendung eines Tiefenfilters der Firma Seitz abfiltriert und ist durch die folgenden Analysendaten charakterisiert:

| Versuch | oHz[1]) [mg KOH/g] | JZ(K)[2]) [g Iod/100 g] | Viskosität[3]) 25°C [mPas] | Iodfarbzahl[4]) [mg Iod/100cm$^3$] |
|---|---|---|---|---|
| Vergleichsversuch mit KOH-Katalyse | 60 | 1 | 115 | 1 |
| Beispiel 1 | 69 | 8,6 | 85,2 | 1 |

1) OH-Zahl; Bestimmung gemäß DIN 53240, DMAP-Methode (1993)

2) Jodzahl; Bestimmung gemäß Kaufmann, DGF C-VII

3) Bestimmung mit Haake Rotationsviskosimeter VT 550

4) Bestimmung mit Jodfarbskala

| Versuch | Mono-PG[1] [%] | Di-PG [%] | Tri-PG [%] |
|---|---|---|---|
| Vergleichsversuch mit KOH-Katalyse | 0,4 | 0,3 | 1,0 |
| Beispiel 1 | <0,3 | <0,3 | <0,3 |

1) PG = Propylenglykol

Die Bestimmung der PG-Nebenprodukte erfolgte gaschromatographisch unter Verwendung eines internen Standards (Headspace GC, Trennsäule: DB 1701)

Beispiel 2: Herstellung eines Trägeröls

160 g (0,80 Mol) Tridecanol N werden zusammen mit 4,30 g Na-Aluminat (0,3 Gew.-%), bezogen auf den Gesamtansatz, unter vermindertem Druck bei 25 mbar und 80°C eine Stunde an einem Rotavapor vorbehandelt. Das erhaltene Gemisch wird in einem Druckautoklaven vorgelegt und auf 145°C erhitzt. Bei dieser Temperatur werden unter erhöhtem Druck bei 6 bar und innerhalb von etwa 15 Stunden 1267 g (17,6 Mol) Butylenoxid eingegast. Das erhaltene Reaktionsgemisch wird anschließend filtriert und ist durch die folgenden Analysendaten charakterisiert:

1. Chemische Charakterisierung

| Versuch | OHZ [mg KOH/g] | JZ(K) [g Iod/100 g] | Viskosität 25°C [mPas] | Iodfarbzahl [mg Iod/100cm$^3$] |
|---|---|---|---|---|
| Vergleichsversuch mit KOH-Katalyse | 40 | - | - | - |
| Beispiel 2 | 51 | 3,2 | 263 | 2 |

Die Bestimmung des Restmetallgehaltes lieferte folgende Ergebnisse:

| Versuch | Katalysator | Metallgehalt [ppm] | | |
|---|---|---|---|---|
| | | Na | Al | K |
| Vergleichs-produkt | KOH | - | - | <10 |
| Heterogen-Katalyse | Na-Aluminat | 40 | <10 | - |

Die Bestimmung von Na, K und Al erfolgte nach dem Aufschlußverfahren APV 2 durch Atomabsorptionsspektometrie.

2. Motortests

Hinsichtlich der Einlaßventilsauberkeit wurden bei verschiedenen Kraftfahrzeugtypen die folgenden Ergebnisse erzielt:

a) Einlaßventilsauberkeit: OPEL KADETT nach CEC F04-A-87

| Kraft-Stoff | Additiv-Paket | Dosier-Höhe [mg/kg] | Ventilablagerungen [mg/Ventil] | | | | Durch-Schnitt [mg] |
|---|---|---|---|---|---|---|---|
| | | | 1 | 2 | 3 | 4 | |
| Nr. 493 | Grundwert | | 390 | 213 | 104 | 510 | 304 |
| Nr. 493 | Vergleichs-produkt KOH-Katalyse | 300 | 2 | 42 | 1 | 0 | 11 |
| Nr. 493 | Heterogen-Katalyse Na-Aluminat | 300 | 4 | 46 | 0 | 0 | 13 |

b) Einlaßventilsauberkeit: MERCEDES BENZ M 102 E nach CEC F05-A-93

| Kraft-Stoff | Additiv-Paket | Dosier-Höhe [mg/kg] | Ventilablagerungen [mg/Ventil] | | | | Durch-Schnitt [mg] |
|---|---|---|---|---|---|---|---|
| | | | 1 | 2 | 3 | 4 | |
| Nr. 493 | Grundwert | | 279 | 232 | 297 | 261 | 267 |
| Nr. 493 | Vergleichs-produkt KOH-Katalyse | 500 | 3 | 34 | 38 | 18 | 23 |
| Nr. 493 | Heterogen-Katalyse Na-Aluminat | 500 | 0 | 93 | 0 | 11 | 26 |

Beispiel 3: Herstellung eines Niotensids

250 g (1,17 Mol) $C_{13/15}$-oxoalkohol werden zusammen mit 1,6 g Na-Aluminat (0,2 Gew.-%), bezogen auf den Gesamtansatz, unter vermindertem Druck bei 25 mbar und 80°C eine Stunde an einem Rotavapor vorbehandelt. Das erhaltene Gemisch wird in einem Druckautoklaven vorgelegt und auf 120 bis 130°C erhitzt. Bei dieser Temperatur werden unter erhöhtem Druck bis ca. 8 bar und innerhalb von etwa 12 Stunden 566,3 g (12,9 Mol) Ethylenoxid eingegast. Das erhaltene Reaktionsgemisch wird anschließend filtriert und ist durch die folgenden Analysendaten charakterisiert:

| Versuch | OHZ [mg KOH/g] | JZ(K) [g Iod/100 g] | Viskosität 25°C[mPas] | Iodfarbzahl [mg Iod/ 100cm$^3$] |
|---|---|---|---|---|
| Marktprodukt | 82 | 4 | 36 | 1 |
| Beispiel 3 | 81 | 0,3 | 38 | 2 |

| Versuch | Mono-ethylenglykol [%] | Diethylen-glykol [%] | Triethylen-Glykol [%] | Tetra-ethylenglykol [%] |
|---|---|---|---|---|
| Marktprodukt | <0,5 | <0,5 | <0,5 | <0,5 |
| Beispiel 3 | <0,5 | <0,5 | <0,5 | <0,5 |

| Versuch | Katalysator | Metallgehalt [ppm] | | |
|---|---|---|---|---|
| | | Na | Al | K |
| Marktprodukt | KOH | - | - | 750 |
| Beispiel 3 | Na-Aluminat | 44 | 9 | - |

Beispiel 4: Herstellung eines Niotensids

250 g (1,17 Mol) $C_{13/15}$-oxoalkohol werden zusammen mit 8,1 g Na-Aluminat (1,0 Gew.-%), bezogen auf den Gesamtansatz, unter vermindertem Druck bei etwa 25 mbar und 80°C eine Stunde an einem Rotavapor vorbehandelt. Das erhaltene Gemisch wird in einem Druckautoklaven vorgelegt und auf 120 bis 130°C erhitzt. Bei dieser Temperatur werden unter erhöhtem Druck bis etwa 6 bis 8 bar und innerhalb von etwa 12 Stunden 566,3 g (12,9 Mol) Ethylenoxid eingegast. Das erhaltene Reaktionsgemisch wird anschließend filtriert und ist durch die folgenden Analysendaten charakterisiert:

| Versuch | OHZ [mg KOH/g] | JZ(K) [g Iod/100 g] | Viskosität 25°C[mPas] | Iodfarbzahl [mg Iod/ 100cm$^3$] |
|---|---|---|---|---|
| Marktprodukt | 82 | 4 | 36 | 1 |
| Beispiel 4 | 87 | 0,4 | 37 | 7 |

| Versuch | Mono-ethylenglykol [%] | Di-ethylenglykol [%] | Triethylenglykol [%] | Tetraethylenglykol [%] |
|---|---|---|---|---|
| Marktprodukt | <0,5 | <0,5 | <0,5 | <0,5 |
| Beispiel 4 | <0,5 | <0,5 | <0,5 | <0,5 |

| Versuch | Katalysator | Metallgehalt [ppm] | | |
|---|---|---|---|---|
| | | Na | Al | K |
| Marktprodukt | KOH | - | - | 750 |

(fortgesetzt)

| Versuch | Katalysator | Metallgehalt [ppm] | | |
|---|---|---|---|---|
| | | Na | Al | K |
| Beispiel 4 | Na-Aluminat | 310 | 22 | - |

Die folgende Tabelle zeigt die Ergebnisse eines Vergleichs eines Marktproduktes ($C_{13}/_{15}$-Oxoalkohol + 11 EO) mit dem durch die erfindungsgemäße Verwendung von basischen Aluminaten als Katalysator hergestellten entsprechenden Reaktionsprodukt.

| Vergleich: $C_{13/15}$-Oxoalkohol + 11 EO | | | | | | |
|---|---|---|---|---|---|---|
| | $C_{13/15}$-Oxoalkohol + 11 EO Marktprodukt | | $C_{13/15}$-Oxoalkohol+ 11 EO (1 Gew.-% Kat.)[1] | | $C_{13/15}$-Oxoalkohol + 11 EO (0,1 Gew.-% Kat.)[2] | |
| | | | | | | |
| $p^H$ (1 g/l) | 9,8 | | 9,7 | | 9,7 | |
| GFS [mN/m] (1 g/l; 25°C) | 3 min | 30 min | 3 min | 30 min | 3 min | 30 min |
| Decan | 4,9 | 4,2 | 4,5 | 3,9 | 5,2 | 4,7 |
| Hexadecan | 5,1 | 4,6 | 3,3 | 2,7 | 4,9 | 5,1 |
| IPM | 4,9 | 4,4 | 3,0 | 2,8 | 4,4 | 4,1 |
| Olivenöl | 4,3 | 2,6 | 2,1 | 1,6 | 2,7 | 2,l |
| Neutralöl 1A | 1,5 | 1,5 | 1,3 | 1,2 | 1,4 | 1,4 |
| **Randwinkel** [Grad] | 0 | | 0 | | 0 | |
| (0,2 g/l; 40°C) $H_2O$ | 0 | | 0 | | 0 | |
| PE        125 | 0 | | 0 | | 22 | |
| V2A       92 | 16 | | 0 | | 13 | |
| Keramik       98 | | | | | | |
| Glas       95 | | | | | | |
| **OFS** [mN/m] 25°C 40°C | 0,2 g/l 31,2 | 1 g/l 31,2 | 0,2 g/l 30,8 | 1 g/l 29,9 | 0,2 g/l 31,1 | 1 g/l 30,2 |
| **Trübungspunkt** in Wasser [°C] 10 g/l | 82 | | 82 | | 89 | |
| Netzvermögen auf Baumwolle [sek] (1 g/l; 23°C) | 39 | | 27 | | 40 | |
| **Löslichkeit** [1 g/l] | 1 (klar) | | 1 (klar) | | 1 (klar) | |
| (Trübungseinheiten) | 1 (klar) | | 1 (klar) | | 1 (klar) | |
| VE-Wasser       25°C | 1 (klar) | | 1 (klar) | | 1 (klar) | |
| 40°C | | | | | | |
| 20°dH       25°C | | | | | | |

1) $C_{13/15}$-oxoalkohol + 11 EO; Kat.: Na-Aluminat (1 Gew.-%)
2) $C_{13/15}$-oxoalkohol + 11 EO; Kat.: Na-Aluminat (0,1 Gew.-%)
GFS = Grenzflächenspannung
OFS = Oberflächenspannung

(fortgesetzt)

| Vergleich: C$_{13/15}$-Oxoalkohol + 11 EO | | | |
|---|---|---|---|
| | C$_{13/15}$-Oxoalkohol + 11 EO Marktprodukt | C$_{13/15}$-Oxoalkohol+ 11 EO (1 Gew.-% Kat.)[1] | C$_{13/15}$-Oxoalkohol + 11 EO (0,1 Gew.-% Kat.)[2] |
| **Fettablösevermögen** [sek] (1 g/l; 40°C) (Olivenöl/Neutralöl) Teflon PE V2A Keramik Glas | jeweils > 600 | jeweils > 600 | jeweils > 600 |

1) C$_{13/15}$-oxoalkohol + 11 EO; Kat.: Na-Aluminat (1 Gew.-%)
2) C$_{13/15}$-oxoalkohol + 11 EO; Kat.: Na-Aluminat (0,1 Gew.-%)
GFS = Grenzflächenspannung
OFS = Oberflächenspannung

Ergebnis:

Bezüglich der kolloidchemischen Daten sind die beiden erfindungsgemäßen Produkte mit dem Marktprodukt praktisch identisch.

**Patentansprüche**

1. Verfahren zur Oxyalkylierung von Alkanolen, wobei man wenigstens ein Alkanol mit wenigstens einem Alkylenoxid in einer basenkatalysierten Reaktion umsetzt,
**dadurch gekennzeichnet**, daß
die Umsetzung unter Verwendung eines heterogenen basischen Katalysators erfolgt, der ausgewählt ist unter basischen Aluminaten.

2. Verfahren nach Anspruch 1, dadurch gekennzeichnet, daß das basische Aluminat unter Alkali- und Erdalkalimetallaluminaten ausgewählt ist.

3. Verfahren nach einem der vorhergehenden Ansprüche, dadurch gekennzeichnet, daß man

   a) das Alkanol zunächst mit dem basischen Aluminat aktiviert; und

   b) das aktivierte Alkanol mit dem Alkylenoxid oxyalkyliert.

4. Verfahren nach einem der vorhergehenden Ansprüche, dadurch gekennzeichnet, daß man das Aluminat in einer Menge von 0,1 Gew.-% bis 1,0 Gew.-%, bezogen auf das Gesamtgewicht von Alkanol und Alkylenoxid, zur Aktivierung einsetzt.

5. Verfahren nach einem der Ansprüche 3 und 4, dadurch gekennzeichnet, daß die Alkanol-Aktivierung bei einem Druck im Bereich von 10 bis 100 mbar und einer Temperatur im Bereich von etwa 20 bis 150°C erfolgt.

6. Verfahren nach einem der vorherigen Ansprüche, dadurch gekennzeichnet, daß die Oxyalkylierung des aktivierten Alkanols bei einem Druck im Bereich von etwa 1 bis 10 bar und einer Temperatur im Bereich von etwa 100 bis 160°C erfolgt.

7. Verfahren nach einem der vorherigen Ansprüche, dadurch gekennzeichnet, daß das Alkanol unter einem geradkettigen oder verzweigten, einwertigen C$_2$-C$_{22}$-Alkanol oder Gemischen solche Alkanole und das Alkylenoxid unter einem C$_2$-C$_6$-Alkylenoxid oder Gemischen solcher Alkylenoxide ausgewählt ist.

8. Verfahren nach einem der vorherigen Ansprüche, dadurch gekennzeichnet, daß je Mol Alkanol etwa 1 bis 100 Mole Alkylenoxid eingesetzt werden.

9. Oxalkyliertes Alkanol erhältlich nach einem Verfahren gemäß einem der vorherigen Ansprüche.

10. Oxalkyliertes Alkanol nach Anspruch 9, erhältlich durch Umsetzung wenigstens eines geradkettigen oder verzweigten, einwertigen $C_2$-$C_{22}$-Alkanols mit 10 bis 30 Mol wenigstens eines $C_3$-$C_4$-Alkylenoxids.

11. Oxalkyliertes Alkanol nach Anspruch 9, erhältlich durch Umsetzung wenigstens eines geradkettigen oder verzweigten, einwertigen $C_2$-$C_{22}$-Alkanols mit 3 bis 80 Mol Ethylenoxid.

12. Verwendung eines oxalkylierten Alkanols nach Anspruch 9 oder 10 als Trägeröl in Kraftstoffadditiven.

13. Verwendung eines oxalkylierten Alkanols nach Anspruch 9 oder 11 als Niotensid in Wasch- oder Reinigungsmitteln.

14. Kraftstoffadditivkonzentrat, enthaltend neben üblichen Additivkomponenten wenigstens ein oxalkyliertes Alkanol nach Anspruch 9 oder 10 als Trägeröl.

15. Wasch- oder Reinigungsmittel, enthaltend neben üblichen Bestandteilen wenigstens ein oxalkyliertes Alkanol nach Anspruch 9 oder 11 als Niotensid-Komponente.

16. Kraftstoffzusammensetzung für Verbrennungsmotoren, enthaltend in einer Hauptmenge eines flüssigen Kohlenwasserstoffkraftstoffs wenigstens ein oxalkyliertes Alkanol nach Anspruch 9 oder 10 als Trägerölkomponente.

17. Verwendung von basischen Aluminaten als Katalysatoren zur Oxyalkylierung von Alkanolen mit Alkylenoxiden.